# EUROPÄISCHE PATENTSCHRIFT

(11) **EP 1 185 911 B1**
(45) Veröffentlichungstag und Bekanntmachung des Hinweises auf die Patenterteilung: **12.11.2003**
(21) Anmeldenummer: 00943723.7
(22) Anmeldetag: 20.05.2000
(51) Int. Cl.: G05D 11/13, G05B 13/02

(54) **VERFAHREN ZUR STEUERUNG DER OPTIMALEN DOSIERMENGE VON ZUSÄTZEN ZU KONTINUIERLICH STRÖMENDEN FLUIDEN**
METHOD FOR CONTROLLING THE OPTIMAL DOSING QUANTITY OF ADDITIVES TO CONTINUOUSLY FLOWING FLUIDS
PROCEDE DE REGULATION DE LA QUANTITE DOSEE OPTIMALE D'ADDITIFS A AJOUTER A DES FLUIDES S'ECOULANT EN CONTINU

(30) Priorität: 01.06.1999 DE 19925515
(43) Veröffentlichungstag der Anmeldung: 13.03.2002
(73) Patentinhaber: Aru Anlagen für Recycling und Umweltschutz, 66763 Dillingen (DE)
(72) Erfinder: BIEGEL, Johannes, 66763 Dillingen (DE); KLUTH, Rainer, 53117 Bonn (DE)
(74) Vertreter: Fuchs Mehler Weiss & Fritzsche
(86) Internationale Anmeldenummer: EP0004551
(87) Internationale Veröffentlichungsnummer: WO00073869

(56) Entgegenhaltungen:
- WO-A-90/10083
- US-A- 3 718 809
- US-A- 5 156 975
- US-A- 5 645 799

## Beschreibung

Die Erfindung betrifft ein Verfahren zur Steuerung der optimalen Dosiermenge Dₒₚₜ von in kontinuierlich strömende, zu behandelnde Fluide einzubringende Aufbereitungschemikalien.

Beispiele für mit einzubringenden Aufbereitungschemikalien zu behandelnde Fluide sind die Prozeß- und Abwässer von Großwäschereien, die Spülwässer aus Reinigungs- und Entfettungsbädern, die verbrauchten Kühlschmierstoffe aus der metallverarbeitenden Industrie und dispergierte wäßrige Farb- und Lackgemische der Chemie. Für die Praxis von besonderer Bedeutung ist die Aufbereitung von öl-, tensid- und schwermetallhaltigen Prozeßwässern, Emulsionen und wäßrigen Dispersionen.

Die genannten Fluide lassen sich unter anderem durch chemisch-physikalische Grundoperationen der Verfahrenstechnik aufbereiten. Ziel dieser Aufbereitung ist die Auftrennung der Fluide in eine wiedereinsetzbare und/oder einleitbare Wasserphase einerseits und in verwertbare, verbrennbare oder deponierbare Reststoffe andererseits. Zu Beginn der Fluidbehandlung werden nach der Einstellung von Betriebsparametern - beispielsweise Temperatur und/oder pH-Wert - notwendige Entgiftungsverfahren wie beispielsweise eine Cyanid-Oxidation, die umweltschädliche Stoffe in weniger schädliche Stoffe umwandeln, durchgeführt. Anschließend werden im Fluid befindliche, unerwünschte Begleitstoffe weitgehend durch Zugabe von anorganischen und/oder organischen Aufbereitungschemikalien in eine Schlammphase überführt, die sich aus der Wasserphase abtrennen läßt. Als Einsatz von anorganischen Aufbereitungschemikalien kommen beispielsweise die Fällung, insbesondere die Fällung von Schwermetallen als Hydroxide oder Sulfide, und Flockung in Betracht. Die Spaltung von Emulsionen und Dispersionen mit organischen Spaltmitteln und die Flockulation mit Polyelektrolyten sind Beispiele für die Zugabe von organischen Aufbereitungschemikalien.

Alle Verfahren zeichnen sich durch eine von der Konzentration der unerwünschten Inhalts- bzw. Begleitstoffen abhängigen Zugabemenge von organischen und/oder anorganischen Aufbereitungschemikalien und intensiver Durchmischung der Aufbereitungschemikalien mit den Fluiden aus. Zur Abtrennung der Schlammphasen kommen vor allem Grundoperationen der Verfahrenstechnik wie beispielsweise die Filtration, die Flotation, die Sedimentation, das Zentrifugieren und das Membranverfahren zum Einsatz. Durch den oftmals diskontinuierlichen Anfall der zu behandelnden Wässer, werden diese vor der Aufbereitung in der Regel in Stapelbehältern aufgefangen. Trotz dieser Stapelungen können die Eigenschaften der Fluide - Konzentration der Begleitstoffe, pH-Wert, Temperatur etc. - mit der Zeit erheblich schwanken, so daß die optimale Zugabemenge Dₒₚₜ der Aufbereitungschemikalien an diese Schwankungen angepaßt werden muß. Die Qualität der Aufbereitung und damit die Bestimmung der optimalen Zugabemenge Dₒₚₜ der Aufbereitungschemikalien kann mit geeigneten Verfahren, wie beispielsweise dem Streu- und Durchlichtverfahren, dem potentiometrischen Meßverfahren, der Ultraschallmessung, der Messung des Brechungsindexes, der Messung des Strömungspotentials und anderen, gemessen werden.

Nach dem Stand der Technik erfolgt die Aufbereitung der Fluide überwiegend in diskontinuierlich betriebenen Anlagen, wobei die Dosierung der Aufbereitungschemikalien häufig noch von Hand, zunehmend jedoch auch geregelt erfolgt. Dabei sieht die Regelung vor, daß ein Vergleich eines gemessenen Istwertes - beispielsweise die Konzentration eines Inhaltsstoffes - mit einem vorgegebenem Sollwert durchgeführt wird. Die Auswertung führt dann zu einer Anpassung der Dosierung. Liegt der gemessene Istwert - beispielsweise die Konzentration eines gesundheitsschädlichen Inhaltsstoffes eines in einer Kläranlage aufbereiteten Abwasserstromes - oberhalb des einzuhaltenden Sollwertes, der hier ein einzuhaltender Grenzwert ist, so liegt eine Unterdosierung vor, und die Menge der zugeführten Aufbereitungschemikalie wird höher dosiert. Nachteilig an dieser Regelung ist, daß absolute Werte gemessen werden und somit das einwandfreie Funktionieren der Meßsonde eine unabdingbare Voraussetzung für eine zuverlässige Regelung ist. Zum einen bedeutet dies notwendigerweise eine regelmäßige Kalibrierung der Meßsonde zur Überprüfung des Nullpunktes, und zum anderen, daß Umstände, die das Meßergebnis qualitativ beeinflussen, wie beispielsweise eine Verschmutzung der Sonde, nicht eliminiert werden können.

Ein weiteres Beispiel für eine Regelung, die auf dem Abgleich von Soll- und Istwert basiert, ist die Messung der Trübung eines in einer Kläranlage aufbereiteten Abwasserstromes. Hier wird nicht eine im einzelnen interessierende Konzentration o.ä. gemessen. Vielmehr beschränkt sich die Messung auf eine spezielle Eigenschaft - die Trübung- , die Aussagen über die Qualität der Aufbereitung zuläßt.

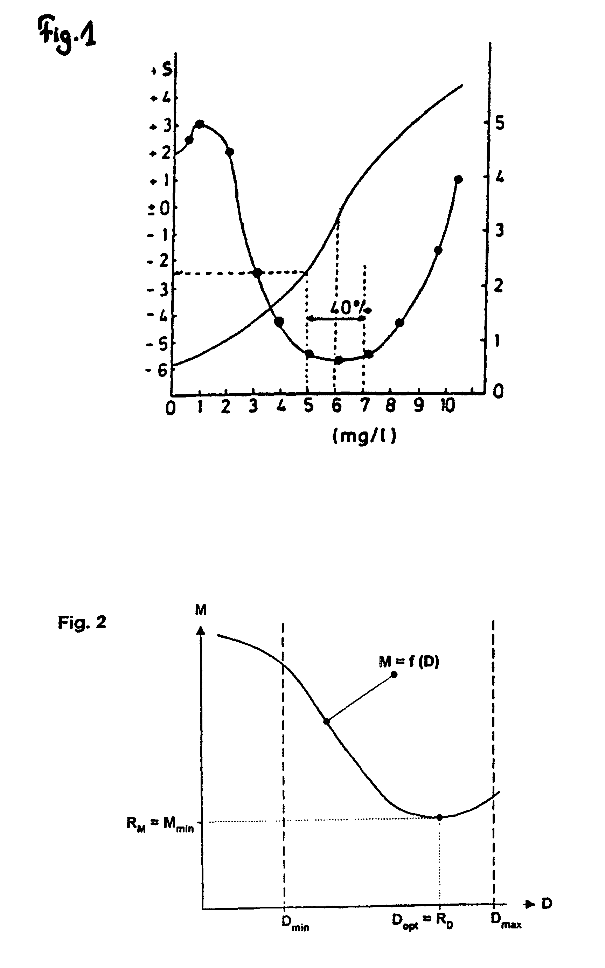

Figur 1 zeigt exemplarisch den funktionalen Zusammenhang zwischen der Trübung in einer Probenflüssigkeit, die einer Kläranlage entnommen ist, und der Dosiermenge an zugegebenem Polymer als Aufbereitungschemikalie. Zusätzlich ist das Signal eines Streaming-Current-Detektors eingetragen. Figur 1 ist dem Artikel "Fällungsmittel optimal dosieren" (Umwelt Bd. 21 (1991) Nr. 6-Juni, Seite 331-332) entnommen. Die in Figur 1 gezeigte Trübungskurve weist einen charakteristischen funktionalen Zusammenhang zwischen Trübung der Probenflüssigkeit und eingebrachtem kationischem Polymer als Reaktionsmittel auf. Durch die Zugabe von Polymer wird die Trübung der Probenflüssigkeit zunächst verringert, erreicht dann bei etwa 6 mg/l Polymer ihr Minimum, wobei die Trübungskurve im Bereich ihres Minimums sehr flach verläuft, und steigt danach wieder an. Die Trübungskurve, im folgenden verallgemeinernd Meßfunktion genannt, wird durch einfache Messung der Trübung der Probenflüssigkeit durch beispielsweise das Durchlichtverfahren, und durch gleichzeitige Messung des zugegebenen Polymers ermittelt. Die optimale Dosiermenge ergibt die minimale Trübung. Eine mögliche Regelung ist die auf dem Abgleich von Soll- und Istwert basierende und oben bereits erwähnte Regelung. Eine Regelung der Dosiermenge direkt über eine Messung der absoluten Trübung ist aber unbefriedigend, da die Trübungskurve im Bereich ihres Minimums flach verläuft und somit eine beginnende Änderung der Qualität der Probenflüssigkeit nur schwer zu sensierbar ist. Des weiteren ist sie unbefriedigend, weil bedingt durch die Messung absoluter Werte, beispielsweise eines höheren Trübungwertes, keine Aussage darüber getroffen werden kann, ob die Regelung links - im Bereich der Unterdosierung - oder rechts - im Bereich der Überdosierung - vom optimalen Betriebspunkt arbeitet. Die Trübungsmessung ist zwar ein brauchbares Instrument für die Qualitätskontrolle, aber ungeeignet zur Regelung der Zugabemenge von Aufbereitungschemikalien. Aus diesem Grunde bedient man sich bei dem vorliegenden Verfahren eines Streaming-Current-Detektors. Sein Signal weist im relevanten Bereich der Trübungskurve eine große Steigung auf und ermöglicht dadurch die Detektierung von kleinsten Abweichungen der Dosiermenge von der optimalen Dosiermenge. Vorher wird der Streaming-Current-Detektor in der Art kalibriert, daß er bei der optimalen Dosiermenge den Wert 0 anzeigt, so daß im folgenden eine positive Abweichung eine Überdosierung und eine negative eine Unterdosierung anzeigt.

Die Dosierleistung wird kontinuierlich auf Basis der drei Messgrößen Durchflußleistung, Trübung und Ladungsanalysator (Streaming-Current) geregelt.

Obwohl der Streaming-Current-Detektor als hilfreiches Zwischenelement in die Mess- bzw. Regelkette eingebracht wird, weist auch diese Regelung die meisten der oben aufgezählten Nachteile auf. Wieder werden Absolutwerte gemessen, was notwendigerweise eine regelmäßige Kalibrierung des Streaming-Current-Detektors zur Überprüfung des Nullpunktes erforderlich macht. Zudem wird die gesamte Regelung bzw. das von ihr bereitgestellte Ergebnis qualitativ durch beispielsweise eine Verschmutzung des Streaming-Current-Detektors verschlechtert. Zwar kann einer Verschmutzung durch eine kontinuierliche Ultraschallreinigung entgegengewirkt werden, nicht aber eine Kalibrierung überflüssig machen. Die Beeinflußung der Qualität der Aufbereitung durch die Wanderung des Nullpunktes, die Verschmutzung der Meßtechnik etc. werden im folgenden auch als Störanfälligkeit bezeichnet.

Aus wirtschaftlichen Gründen und aus Gründen einer möglichen Verschlechterung der Qualität der aufbereiteten Fluide, muß die Zugabe an Aufbereitungschemikalien über die optimale Dosiermenge hinaus durch geeignete Verfahren vermieden werden. Das Prinzip "So viel wie nötig, so wenig wie möglich" sollte grundsätzlich beim Einsatz von Chemikalien Beachtung finden.

Vor allem bei größeren Durchsatzmengen ist die kontinuierliche Aufbereitung wesentlich kostengünstiger als die diskontinuierliche Aufbereitung.

Eine Vorrichtung zur Optimierung der Dosierung von in Abwässer einzubringende Aufbereitungschemikalien ist bekannt geworden aus der US-A-5 645 799. Dabei kommt ein fluoreszierender Tracer zum Einsatz, welcher eine kontinuierliche Überwachung der Wirksamkeit der Aufbereitungschemikalien ermöglicht. Ein übliches Regelverfahren optimiert dann die Menge der Aufbereitungschemikalien entsprechend einer programmierten Optimierungslogik.

Vor diesem Hintergrund ist es Aufgabe der Erfindung, ein Verfahren zur Steuerung der optimalen Dosiermenge Dₒₚₜ von in kontinuierlich strömende, zu behandelnde Fluide einzubringende Aufbereitungschemikalien, insbesondere zur kontinuierlichen Aufbereitung von öl-, tensid- und schwermetallhaltigen Prozessund Abwässern, Emulsionen und wässrigen Dispersionen, bereitzustellen, wobei die Störanfälligkeit des Verfahrens im Vergleich zu herkömmlichen Verfahren geringer sein soll, das Verfahren selbstkalibrierend sein soll und sich das Verfahren durch einen möglichst ökonomischen Einsatz von Aufbereitungschemikalien auszeichnen sollte.

Gelöst wird diese Aufgabe durch ein Verfahren zur Steuerung der optimalen Dosiermenge Dₒₚₜ, bei dem
- eine bestimmte Eigenschaft des zu behandelnden Fluids mittels einer Meßtechnik kontinuierlich überwacht wird, bei der die Dosiermenge Dᵢ und ein ermittelter zugehöriger Meßwert Mᵢ einen für den vorliegenden Anwendungsfall charakteristischen funktionalen Zusammenhang, die sogenannte Meßwertfunftion M = f(D), aufweisen,
- eine maximale bzw. minimale absolute Dosiermenge Dₘₐₓ bzw. Dₘᵢₙ, die nicht über- bzw. unterschritten werden darf, vorgegeben wird,
- die Meßwertfunktion M = f(D) einen maximalen bzw. einen minimalen Meßwert Mₘₐₓ bzw. Mₘᵢₙ in dem durch Dₘₐₓ und Dₘᵢₙ definierten Dosiermengen-Fenster aufweist,
- zu Beginn der Steuerung festgelegt wird, ob in dem durch Dₘₐₓ und Dₘᵢₙ definierten Dosiermengen-Fenster der maximale bzw. minimale Meßwert Mₘₐₓ bzw. Mₘᵢₙ als Richtwert R_{M}=f(R_{D}) für die optimale Dosiermenge Dₒₚₜ = R_{D} zugrunde gelegt wird,
- die Dosiermenge D periodisch im Abstand einer vorgebbaren Taktzeit Δtᵢ um eine vorgebbare Dosiermengenänderung ΔDᵢ verändert wird, wobei
- ein Toleranzwert Tᵢ vorgegeben wird, und
- falls Mₘₐₓ als Richtwert R_{M}=f(R_{D}) zugrunde gelegt wird, bei einer positiven Meßwertänderung ΔMᵢ der folgenden vorzunehmenden Dosiermengenänderung ΔDᵢ₊₁ das gleiche Vorzeichen zugeordnet wird wie der vorherigen Dosiermengenänderung ΔDᵢ, und bei einer negativen Meßwertänderung ΔMᵢ der folgenden vorzunehmenden Dosiermengenänderung ΔDᵢ₊₁ das entgegengesetzte Vorzeichen zugeordnet wird wie der vorherigen Dosiermengenänderung ΔDᵢ, und im letzteren Fall Dᵢ₋₁ als neuer Richtwert R_{D*} für die optimale Dosiermenge Dₒₚₜ zugrunde gelegt wird, falls die Vorzeichen der durchgeführten Dosiermengenänderungen ΔDᵢ und ΔDᵢ₋₁ gleich sind,
- falls Mₘᵢₙ als Richtwert R_{M}=f(R_{D}) zugrunde gelegt wird, bei einer negativen Meßwertänderung ΔMᵢ der folgenden vorzunehmenden Dosiermengenänderung ΔDᵢ₊₁ das gleiche Vorzeichen zugeordnet wird wie der vorherigen Dosiermengenänderung ΔDᵢ und bei einer positiven Meßwertänderung ΔMᵢ der folgenden vorzunehmenden Dosiermengenänderung ΔDᵢ₊₁ das entgegengesetzte Vorzeichen zugeordnet wird wie der vorherigen Dosiermengenänderung ΔDᵢ, und im letzteren Fall Dᵢ₋₁ als neuer Richtwert R_{D*} für die optimale Dosiermenge Dₒₚₜ zugrunde gelegt wird, falls die Vorzeichen der durchgeführten Dosiermengenänderungen ΔDᵢ und ΔDᵢ₋₁ gleich sind
- im dem Fall, in dem der Betrag der Meßwertänderung ΔMᵢ<Tᵢ ist, die folgende vorzunehmende Dosiermengenänderung ΔDᵢ₊₁ <0 ist, wobei Dᵢ₋₁ als neuer Richtwert R_{D*} für die optimale Dosiermenge Dₒₚₜ zugrunde gelegt wird, falls die Vorzeichen der durchgeführten Dosiermengenänderungen ΔDᵢ, ΔDᵢ₋₁>0 sind.

Ähnlich wie bei dem anhand von Figur 1 erläuterten Beispiel, wird bei dem erfindungsgemäßen Verfahren eine bestimmte Eigenschaft des zu behandelnden Fluids, die Aussagen über die Qualität der Aufbereitung zuläßt, mittels einer Meßtechnik kontinuierlich bestimmt bzw. überwacht. Die Dosiermenge Dᵢ und ein dieser Dosiermenge zugehöriger mit der Meßtechnik ermittelter Meßwert Mᵢ weisen einen für den vorliegenden Anwendungsfall charakteristischen funktionalen Zusammenhang auf. Diese sogenannte Meßwertfunktion M=f(D) kann beispielsweise eine Trübungskurve sein, wie in Figur 1 dargestellt. Es sei an dieser Stelle ausdrücklich darauf hingewiesen, daß es sich bei der durch die Meßtechnik zu überwachenden Eigenschaft um eine beliebige Eigenschaft des zu behandelnden Fluids handeln kann, solang diese Eigenschaften Aussagen in bezug auf die Qualität der Aufbereitung des Fluids zulassen. Bei der Meßwertefunktion kann es sich um den direkten funktionalen Zusammenhang des Meßwertes Mᵢ und der Dosiermenge Dᵢ handeln, aber auch um ihre erste oder mehrfache Ableitung. Generell kann der direkte funktionale Zusammenhang des Meßwertes Mᵢ und der Dosiermenge Dᵢ durch eine geeignete mathematische Operation in der Art abgewandelt werden, daß die resultierende Meßwertfunktion M = f(D) ein für das erfindungsgemäße Verfahren möglichst günstigen Verlauf im Koordinatensystem annimmt. Günstig sind vor allem Meßwertfunktionen, die mathematisch betrachtet, ein absolutes Maximum bzw. absolutes Minimum aufweisen. Die Gründe hierfür werden im Zusammenhang mit der Erläuterung der Meßwertanalyse deutlich werden.

Des weiteren wird eine maximale absolute Dosiermenge Dₘₐₓ bzw. eine minimale absolute Dosiermengen Dₘᵢₙ vorgegeben, die nicht über- bzw. unterschritten werden darf. Bei diesem Grenzwerten handelt es sich um die vom Fachmann aufgrund seines Erfahrungsschatzes festgelegten Dosiermengen für den jeweiligen Anwendungsfall. Hierdurch soll sichergestellt werden, daß die Dosiermenge nur in dem von Dₘᵢₙ und Dₘₐₓ festgelegten sogenannten Dosiermengenfenster variiert werden kann, so daß eine ausgeprägte Unter- bzw. Überdosierung verhindert wird. Es kann sich bei diesen Grenzwerten aber auch in Ausnahmefällen um die minimale bzw. maximale Fördermenge der Dosiereinrichtung handeln.

Wie oben bereits erwähnt, gibt es Meßwertfunktionen, die sich durch ihren Verlauf für das erfindungsgemäße Verfahren als besonders günstig erweisen. Meßwertfunktionen mit einem absoluten Maximum bzw. absoluten Minimum sind zu bevorzugen. Bei anderen Meßwertfunktionen werden aufgrund des Fehlens absoluter Extremwerte der maximale bzw. der minimale Meßwert Mₘₐₓ bzw. Mₘᵢₙ in dem durch Dₘₐₓ und Dₘᵢₙ definierten Dosiermengenfenster herangezogen.

So wird zu Beginn des Verfahrens festgelegt, ob in dem durch Dₘₐₓ und Dₘᵢₙ definierten Dosiermengenfenster der maximale bzw. minimale Meßwert Mₘₐₓ bzw. Mₘᵢₙ als Richtwert R_{M} für die optimale Dosiermenge Dₒₚₜ=R_{M} zugrundegelegt wird. Richtwert bedeutet, daß die Dosiermenge ihren optimalen Wert Dₒₚₜ dann animmt, wenn der Meßwert seinen Richtwert animmt.

Figur 2 zeigt eine Meßwertfunktion, die beispielsweise eine Trübungskurve wie die in Figur 1 dargestellte sein kann. Der Meßwert M, beispielsweise die Trübung als Eigenschaft des zu behandelnden Fluids, ist auf der Ordinate aufgetragen. Die Dosiermenge D der einzubringenden Aufbereitungschemikalie ist auf der Abszisse aufgetragen.

Des weiteren ist in Figur 2 die maximale absolute Dosiermenge Dₘₐₓ eingetragen, die nicht überschritten werden darf, und die minimale absolute Dosiermenge Dₘᵢₙ, die nicht unterschritten werden darf. Die Meßwertfunktion M = f(D) weist in dem so denifierten Dosiermengenfenster einen maximalen und einen minimalen Meßwert Mₘₐₓ und Mₘᵢₙ auf. Zu Beginn des Verfahrens wird der Steuerung vorgegeben, ob der maximale bzw. der minimale Mₘₐₓ bzw. Mₘᵢₙ als Richtwert R_{M} = f(R_{D}) für die optimale Dosiermenge Dₒₚₜ = R_{D} zugrundegelegt werden soll. Bei der in Figur 2 dargestellten Meßwertfunktion wird der minimale Meßwert Mₘᵢₙ als Richtwert R_{M} zugrundegelegt. Mit anderen Worten, nimmt die Meßwertfunktion den Wert Mₘᵢₙ ein, wird der Steuerung signalisiert, daß sie sich im gewünschten Betriebspunkt der optimalen Dosiermenge Dₒₚₜ befindet.

Die Kurve der Meßwertfunktion kann im Laufe des Verfahrens unter Beibehaltung ihrer Kurvenform anfangen zu wandern und sie kann ihre Form beispielsweise durch Streckung oder Stauchung in X- und/oder Y-Richtung verändern, wobei sie stets ihren charakteristischen Kurvenverlauf - im vorliegenden Fall ihre ausgeprägtes Minimum - beibehält. Die Gründe für das Wandern der Meßfunktion bzw. die Verformung des Kurvenverlaufes sind im einzelnen die folgenden.

Eine Steigerung der Zulaufmenge, d.h. eine Vergrößerung des Volumenstromes des zu behandelnden Fluids, und/oder eine Steigerung der im Fluid befindlichen und mit den Aufbereitungschemikalien zu reagierenden Inhalts- bzw. Begleitstoffen resultiert in einer Zunahme der benötigten optimalen Dosiermenge Dₒₚₜ. Daraus folgt eine Verschiebung der Meßwertfunktion M=f(D) in Richtung zunehmender Dosiermengen bzw. bei gleichbleibender Dosiermenge eine Änderung der Steigung f'(R_{D}) sowie ein Mangel an Aufbereitungschemikalien mit der Folge einer Unterdosierung.

Eine Verringerung der Zulaufmenge, d.h. eine Reduzierung des Volumenstromes des zu behandelnden Fluids und/oder eine Verringerung der im Fluid befindlichen und mit den Aufbereitungschemikalien zu reagierenden Inhalts- bzw. Begleitstoffen resultiert in einer Abnahme der benötigten optimalen Dosiermenge Dₒₚₜ. Daraus folgt eine Verschiebung der Meßwertfunktion M=f(D) in Richtung kleinerer Dosiermengen und bei gleichbleibender Dosiermenge eine Änderung der Steigung f'(R_{D}) sowie ein Überschuß von Aufbereitungschemikalien und somit eine Überdosierung.

Änderungen bzw. ein Wandern der Meßwertfunktionen im Koordinatensystem können auch durch die Sensorik bedingt sein. Dies ist aber ohne Einfluß auf die Funktionstüchtigkeit der Steuerung und somit ohne Einfluß auf die Qualität der Aufbereitung. Kommt es beispielsweise infolge einer Verschmutzung der Sensorik zu einer Änderung des Meßverhaltens der Meßtechnik, wandert die in Figur 2 dargestellte Kurve parallel zur Ordinate bzw. senkrecht zur Abszisse nach oben.

Während des Verfahrens wird die Dosiermenge D periodisch im Abstand einer vorgegebenen Taktzeit Δtᵢ um eine vorgebbare Dosiermengenänderung ΔDᵢ verändert. Dies geschieht unabhängig davon, ob das Verfahren im optimalen Betriebspunkt arbeitet oder nicht, das heißt, ob die optimale Dosiermenge in das zu behandelnde Fluid einbracht wird oder nicht. Dieses Verfahrensmerkmal ist ein wesentlicher Unterschied im Vergleich zu herkömmlichen Verfahren, bei denen eine Veränderung der Dosiermenge nicht stattfindet, solange ein gemessener Ist-Wert mit einem vorgegebenen Soll-Wert übereinstimmt.

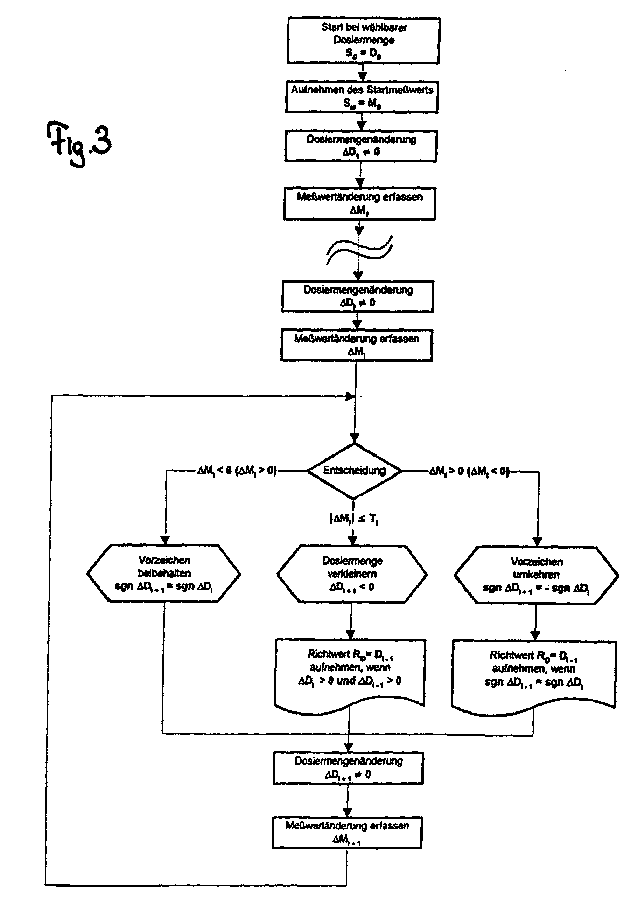

Figur 3 zeigt das Fließbild der Steuerung. Grundsätzlich sind zwei Fälle zu unterscheiden. Wird der in dem durch Dₘₐₓ und Dₘᵢₙ definierten Dosiermengenfenster vorliegende maximale Meßwert Mₘₐₓ der Richtwert R_{M} = f(R_{D}) zugrunde gelegt, so sind die in den Klammern befindlichen Angaben und nicht die ohne Klammern aufgeführten Angaben maßgeblich.

Wird hingegen der in dem durch Dₘₐₓ und Dₘᵢₙ definierten Dosiermengenfenster vorliegende minimale Meßwert Mₘᵢₙ der Richtwert R_{M} = f(R_{D}) zugrunde gelegt, so sind nicht die in den Klammern befindlichen Angaben sondern die ohne Klammern aufgeführten Angaben maßgeblich.

Das Verfahren wird mit einer Dosiermenge S_{D}=D_{O} gestartet und der erste zugehörige Startmeßwert S_{M}=M_{O} wird aufgenommen. Es folgt eine erste Dosiermengenänderung ΔD₁. Eine durch diese Dosiermengenänderung induzierte Meßwertänderung ΔM₁ wird erfaßt und analysiert, wobei das Ergebnis der Analyse dieser Meßwertänderung über die weitere Vorgehensweise entscheidet.

Grundsätzlich kann das Verfahren an dieser Stelle auf drei verschiedene Arten fortgeführt werden. Der linke Ast des in Figur 3 dargestellten Fließbildes der Steuerung greift in die Steuerung in der Art ein, daß vorgegeben wird, der folgenden vorzunehmenden Dosiermengenänderung ΔDᵢ₊₁ das gleiche Vorzeichen zu geben wie der vorherigen Dosiermengenänderung ΔDᵢ. Es wird also die Anweisung ausgegeben, die Dosiermenge in gleicher Richtung zu ändern. Der rechte Ast des Fließbildes der Steuerung greift in die Steuerung in der Art ein, daß vorgegeben wird, daß die folgende vorzunehmende Dosiermengenänderung ΔDᵢ₊₁ das entgegengesetzte Vorzeichen der vorherigen Dosiermengenänderung ΔDᵢ erhält. Der mittlere Ast wird nur beschritten, falls der Betrag der Meßwertänderung ΔMᵢ kleiner oder gleich einer vorgegebenen Toleranz Tᵢ ist. In diesem Fall erhält die folgende vorzunehmende Dosiermengenänderung ΔDᵢ₊₁ stets ein negatives Vorzeichen.

Die durch die Dosiermengenänderung ΔDᵢ₊₁ verursachte Meßwertänderung ΔMᵢ₊₁ wird wieder erfaßt. Das beschriebene Prozedere wird erneut durchlaufen. Ein Wechseln und ein Beibehalten des Vorzeichens der Dosiermengenänderung wird in Figur 3 formelmäßig durch die Signumfunktion - Abkürzung sgn - angegeben.

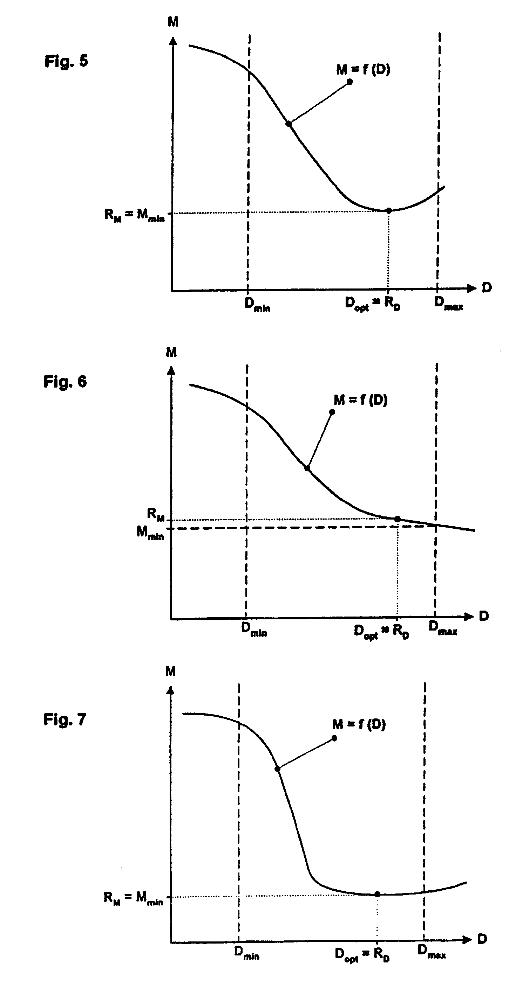

Die Figuren 5 bis 9 zeigen Beispiele für Meßwertfunktionen aus der Abwasseraufbereitung.

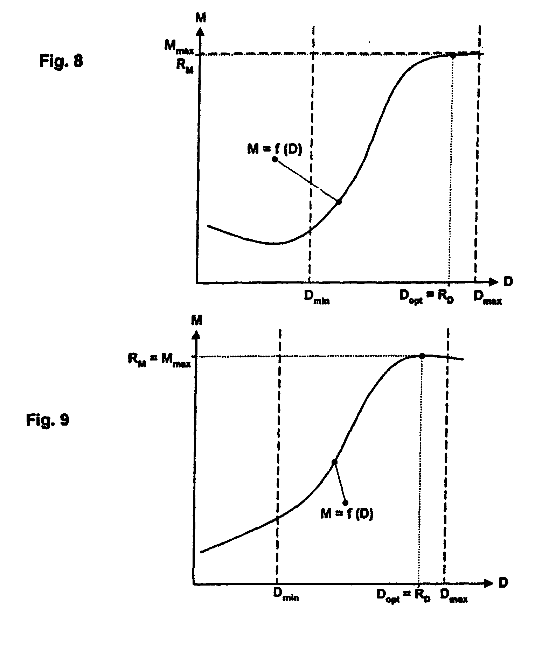

Die Fig. 5, 6 und 7 zeigen Beispiele für Meßwertfunktionen, bei denen ein minimaler Meßwert Mₘᵢₙ als Richtwert R_{M} = f(R_{D}) vorgegeben wird. Figur 5 und 6 zeigen Meßwertfunktionen, wie sie im Bereich der Emulsionsspaltung auftreten können. Das zu behandelnde Fluid ist in beiden Fällen eine Kühl-Schmierstoff-Spülwasser-Mischung, wobei als Aufbereitungschemikalie bzw. Reaktionsmittel ein organischer Demulgator zugegeben wird. Der unterschiedliche Verlauf der Meßwertfunktionen M=f(D) ist durch die Verwendung von verschiedenen Meßtechniken bzw. Sensoren begründet. Bei der in Fig. 5 dargestellten Meßwertfunktion wurde bei der Meßtechnik die Durchlichtmethode angewandt, bei der Licht durch das zu behandelnde Fluid geschickt wird und eine Messung feststellt, wieviel Licht von dem zu behandelnden Fluid absorbiert wurde. Der vom Fluid absorbierte Anteil dient als Meßwert und die optimale Dosiermenge ergibt sich, wenn der Meßwert sein Minimum annimmt.

Bei der in Fig. 6 gezeigten Meßwertfunktion wurde als Meßtechnik eine Ultraschallmethode angewandt, bei der Ultraschallwellen auf das zu behandelnde Fluid ausgesendet werden und eine Empfänger die vom Fluid zurückgeworfenen Wellen empfängt und analysiert. Dieses empfangene Signal dient als Meßwert und wird auf der Ordinate über der Dosiermenge aufgetragen, wobei sich die in Figur 6 dargestellte Meßwertfunktion ergibt. Hierbei handelt es sich nicht wie bei der in Figur 5 dargestellten Meßwertfunktion um eine Meßwertfunktion, die ein absolutes Minimum aufweist. Die Meßwertfunktion weist aber in dem durch Dₘᵢₙ und Dₘₐₓ aufgespannten Dosiermengenfenster einen minimalen Meßwert Mₘᵢₙ=f(Dₘₐₓ) auf, der beispielsweise zu Beginn des Verfahrens als Richtwert R_{M} = f(R_{D}) zugrundegelegt wird. Dadurch, daß der Steuerung ein Toleranzwert Tᵢ vorgegeben wird, kann sich der in Figur 6 eingetragene Betriebspunkt R_{M} = f(R_{D}), der durch die optimale Dosiermenge Dₒₚₜ gekennzeichnet ist, einstellen. Diese besondere Vorgehensweise ist aber nur nötig, falls die verwendeten Meßwertfunktionen kein absolutes Maximum bzw. Minimum aufweisen. Der Richtwert, der sich einstellt, kann über den vorgegebenen Toleranzwert Tᵢ beeinflußt werden.

Figur 7 zeigt als letztes Beispiel für eine Meßwertfunktion, bei der ein minimaler Meßwert Mₘᵢₙ als Richtwert R_{M}=f(R_{D}) vorgegeben wird, eine Klärschlamm-Konditionierung. Das zu behandelnde Fluid ist Überschußschlamm, wobei als Aufbereitungschemikalie bzw. Reaktionsmittel Polymer zugegeben wird. Als Meßtechnik wurde wie in Figur 5 die Durchlich-Methode angewandt. Der Kurvenverlauf der Meßwertfunktion ist eher stufenförmig und unterscheidet sich von den in Figur 5 und 6 dargestellten Meßwertfunktionen. Im Bereich der optimalen Dosiermenge verläuft die Kurve sehr flach. Durch Einstellen der Parameter Tᵢ, ΔDᵢ ist die Steuerung aber auch in der Lage mit dieser Art von Meßwertfunktionen zu arbeiten.

Die Figuren 8 und 9 zeigen Beispiele für Meßwertfunktionen, bei denen ein maximaler Meßwert Mₘₐₓ als Richtwert R_{M}=f(R_{D}) vorgegeben wird. Figur 8 zeigt die Meßwertfunktionen einer Emulsionsspaltung, wobei der Verlauf aufgrund der Verwendung einer anderen Meßtechnik - Refraktrode - sich deutlich von dem in Figur 6 und Figur 5 dargestellten Meßwertfunktion unterscheidet. Das zu behandelnde Fluid ist eine Kühlschmierstoff-Spülwasser-Mischung, wobei als Reaktionsmittel bzw. Aufbereitungschemikalie ein organischer Demulgator hinzugegeben wird. In den durch Dₘᵢₙ und Dₘₐₓ aufgespannten Dosiermengenfenstern weist die Meßwertfunktion kein ausgesprägtes Maximum bzw. Minimum auf, so daß behelfsweise, wie bei den in Figur 6 gezeigten Beispielen der Steuerung der maximale Meßwert Mₘₐₓ = f(Dₘₐₓ) als erster Richtwert vorgegeben wird. Von hier ausgehend stellt sich die optimale Dosiermenge Dₒₚₜ ein und das Wertepaar (R_{M}, R_{D}) wird zum Betriebspunkt. Einfluß auf den sich einstellenden Betriebspunkt bzw. Richtwert R_{M} kann wieder über einen vorgegebenen Toleranzwert Tᵢ genommen werden.

Bei der in Figur 9 dargestellten Meßwertfunktion handelt es sich um eine Meßwertfunktion, wie sie beispielsweise bei der Reduzierung des chemischen Sauerstoffbedarfs eines zu behandelnden Fluids auftritt. Das zu behandelnde Fluid ist Wasser aus biologischer Vorreinigung, wobei Eisen-Trichlorid als Aufbereitungschemikalie hinzugefügt wird. Als Meßtechnik wurde wiederum eine Durchlichtmethode verwendet. Die in Figur 9 dargestellte Meßwertfunktion weist in dem durch Dₘᵢₙ und Dₘₐₓ definierten Dosiermengenfenster ein absolutes Maximum auf, das als Richtwert R_{M} dient.

In Bezug auf das in Figur 3 dargestellte Fließdiagramm muß ergänzend hinzugefügt werden, daß bei einer Vorgehenssweise entsprechend dem mittleren und rechten Ast unter bestimmten Voraussetzungen ein neuer Richtwert R_{D*} für die optimale Dosiermenge Dₒₚₜ abgelegt wird. Mit diesem Wert ist es möglich, zu überprüfen, ob sich die Steuerung noch in dem durch Dₘᵢₙ und Dₘₐₓ definierten Dosiermengenfenster befindet. Ist dies nicht der Fall, kann ein mögliches Ergebnis der Abbruch der Steuerung bzw. des Verfahrens sein. Dadurch daß das Verfahren periodisch die Dosiermenge in kleinen Schritten ΔDᵢ ändert und die dadurch hervorgerufene Änderung des Meßwertes erfaßt, handelt es sich bei dem erfindungsgemäßen Verfahren um ein selbstkalibrierendes Verfahren, das einen neuen, besseren Richtwert von selbst erkennt und diesen seinem weiteren Verfahren zugrundelegt. Das Verfahren kann aus diesem Grunde mit einem beliebigen Wertepaar (S_{D}=D₀, S_{M}=M₀) gestartet werden. Vorteile bietet dies, falls keine Erfahrungswerte für die Dosiermenge vorliegen.

Vorteilhaft sind Verfahrensvarianten, bei denen
- falls Mₘₐₓ als Richtwert R_{M}=f(R_{D}) zugrunde gelegt wird, der folgenden vorzunehmenden Dosiermengenänderung ΔDᵢ₊₁ ein positives Vorzeichen zugeordnet wird, wenn ΔDᵢ ein positives, ΔDᵢ₋₁ ein negatives und ΔMᵢ ein negatives Vorzeichen hat, und
- falls Mₘᵢₙ als Richtwert R_{M}=f(R_{D}) zugrunde gelegt wird, der folgenden vorzunehmenden Dosiermengenänderung ΔDᵢ₊₁ ein positives Vorzeichen zugeordnet wird, wenn ΔDᵢ ein positives, ΔDᵢ₋₁ ein negatives und ΔMᵢ ein positives Vorzeichen hat.

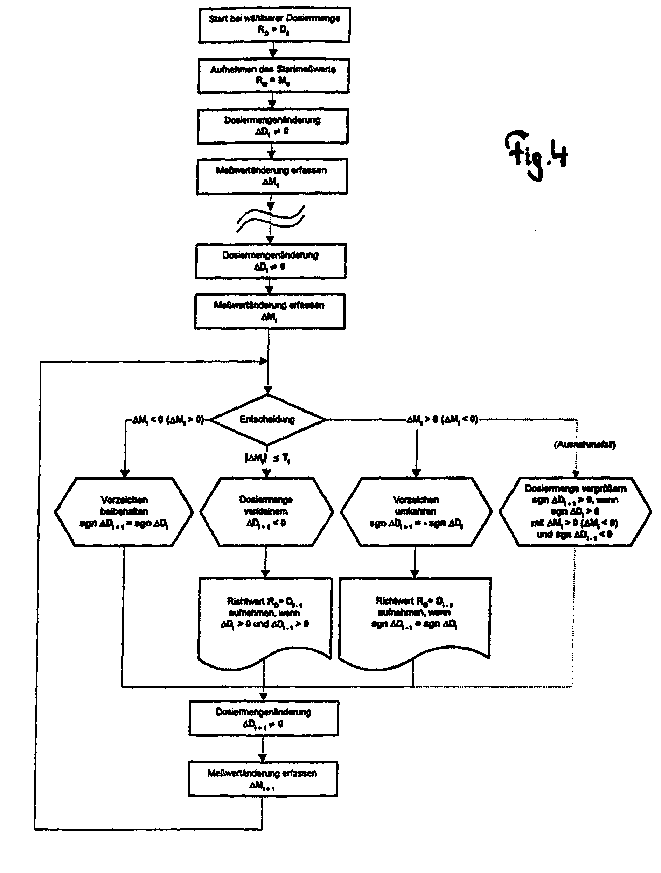

Diese zusätzliche Steuerungsvariante ist in dem in Figur 4 dargestellten Flußdiagramm als vierter Ast in Ergänzung zu der oben anhand von Figur 3 ausführlich erläuterten Steuerung aufgenommen worden. Diese als Ausnahmefall bezeichnete Variante bewirkt eine schnelle Anpassung der Dosiermenge für den Fall, daß die notwendige Dosiermenge durch Änderungen im Zulauf ansteigt und gleichzeitig ΔMᵢ>0 (ΔMᵢ<0) wird, der Meßwert sich also verschlechtert.

Günstig sind Verfahrensvarianten, bei denen zu Beginn des Verfahrens mit einer Dosiermengenänderung ΔDᵢ<0 gestartet wird. Um zur Lösung einer Teilaufgabe des erfindungsgemäßen Verfahrens beizutragen, nämlich die Dosiermenge weitestgehend zu reduzieren und damit einen möglichst ökonomischen Umgang mit den Aufbereitungschemikalien sicherzustellen, ist dies eine zu bevorzugende Vorgehensweise. Dieses Verfahrensmerkmal, nämlich mit einer Dosiermengenänderung ΔDᵢ < O das Verfahren zu beginnen, ist nicht so auszulegen, daß die Aufgabe, möglichst wenig Aufbereitungschemikalien zu verbrauchen, nur durch Hinzunahme dieses Merkmals gelöst wird. Den weitaus größten Beitrag zur Lösung der erfindungsgemäßen Aufgabe liefert die grundsätzliche Vorgehensweise des Verfahrens, die Dosiermenge in periodischen Abständen um einen Betrag ΔDᵢ zu ändern. Wird das Verfahren mit einer negativen Dosiermengenänderung ΔDᵢ<O gestartet, so verstärkt dies den ökonomischen Umgang mit den hinzuzuführenden Aufbereitungschemikalien. Aus diesem Grunde ist ein Verfahren, das mit einer negativen Dosiermengenänderung ΔDᵢ<O beginnt, eine vorzuziehende Verfahrensvariante.

Zu bevorzugen sind Verfahrensvarianten, bei denen
- falls Dᵢ₋₁ als neuer Richtwert R_{D*} für die optimale Dosiermenge Dₒₚₜ zugrunde gelegt wird, der zugehörige Funktionswert der Meßwertfunktion Mᵢ₋₁ ebenfalls als neuer Richtwert R_{M*} zugrunde gelegt wird.

Dadurch daß Mᵢ₋₁ - ein absoluter Meßwert - als zusätzlicher Parameter erfaßt wird, kann die Steuerung dahingehend erweitert werden, daß dieser im Verfahren ermittelte Ist-Wert mit einem der Steuerung vorgegebenen Soll-Wert verglichen wird und das Ergebnis dieses Vergleiches wiederum Einfluß auf das Verfahren nimmt.

Vorteilhaft sind Verfahrensvarianten, bei denen eine maximale Meßwertänderung ΔMᵢ betragsmäßig als oberer Grenzwert ΔM_{grenz} für die Meßwertänderung vorgegeben wird. Dadurch, daß ΔMᵢ als zusätzlicher Parameter erfaßt wird, kann die Steuerung dahingehend erweitert werden, daß dieser im Verfahren ermittelte Ist-Wert mit einem der Steuerung vorgegebenen Soll-Wert verglichen wird und das Ergebnis dieses Vergleichs wiederum Einfluß auf das Verfahren nimmt.

Zu bevorzugen sind Verfahrensvarianten, bei denen das zu behandelnde Fluid nach dem Messen mittels einer Umschaltvorrichtung zum Zwecke einer nochmaligen Behandlung zurückgeführt werden kann.

Beispielsweise kann bei der Trinkwasseraufbereitung der Steuerung ein Mᵢ = M_{grenz} vorgegeben werden, bei dessen Überschreitung die geforderte Qualität des aufbereiteten Trinkwassers nicht mehr den Anforderungen entspricht, so daß das aufbereitete Fluid die Aufbereitungsanlage nicht verläßt, sondern nochmals behandelt wird, falls Mᵢ> M_{grenz} ist.

Generell ist es möglich, zu Beginn des Verfahrens während der Ermittlung eines ersten Richtwertes, das zubehandelnde Fluid, das aufgrund der Tatsache, daß sich der bevorzugte Betriebspunkt bzw. die optimale Dosiermenge noch nicht eingestellt haben, die geforderten Eigenschaften noch nicht aufweist, nochmals einer Aufbereitung zuzuführen. Durch den Einsatz einer Umschaltvorrichtung verläßt das behandelte und weiter zu behandelnde Fluid nicht die Aufbereitungsanlage. In der Praxis wird dieses Fluid einem der Aufbereitungsanlage vorgeschalteten Sammelbehälter zugeführt. Des weiteren findet die Umschaltvorrichtung ebenfalls Anwendung, falls die Steuerung beispielsweise infolge einer Funktionsstörung abgebrochen wird.

Ein Abbruch der Steuerung kann ebenfalls erfolgen, falls eine gemessene maximale Meßwertänderung ΔMᵢ betragsmäßig einen vorgegebenen oberen Grenzwert ΔM_{grenz} übersteigt.

Vorteilhaft sind Verfahren, bei denen die Meßtechnik in einem Bypass-Strom des zu behandelnden Fluidstromes angeordnet wird. Dies macht die Meßtechnik leichter zugänglich und vereinfacht Wartungsarbeiten. Dann wird aber eine Volumenstrommessung sowohl im Bypass als auch im Hauptstrom notwendig, um von der ermittelten Dosiermenge im Bypass auf die erforderliche Dosiermenge im Hauptstrom schließen zu können.

Günstig sind Verfahrensvarianten, bei denen das Verfahren abgebrochen wird, falls die Steuerung innerhalb einer vorgebbaren Anzahl aufeinanderfolgender Verfahrensschritte keinen neuen Richtwert R_{M*}, R_{D*} zugrunde legt.

## Patentansprüche

1. Verfahren zur Steuerung der optimalen Dosiermenge Dₒₚₜ von in kontinuierlich strömende, zu behandelnde Fluide einzubringende Aufbereitungschemikalien, insbesondere zur kontinuierlichen Aufbereitung von öl-, tensid- und schwermetallhaltigen Prozess- und Abwässern, Emulsionen und wässrigen Dispersionen, bei dem
- eine bestimmte Eigenschaft des zu behandelnden Fluids mittels einer Meßtechnik kontinuierlich überwacht wird, bei der die Dosiermenge Dᵢ und ein ermittelter zugehöriger Meßwert Mᵢ einen für den vorliegenden Anwendungsfall charakteristischen funktionalen Zusammenhang, die sogenannte Meßwertfunftion M = f(D), aufweisen,
- eine maximale bzw. minimale absolute Dosiermenge Dₘₐₓ bzw. Dₘᵢₙ, die nicht über- bzw. unterschritten werden darf, vorgegeben wird,
- die Meßwertfunktion M = f(D) einen maximalen bzw. einen minimalen Meßwert Mₘₐₓ bzw. Mₘᵢₙ in dem durch Dₘₐₓ und Dₘᵢₙ definierten Dosiermengen-Fenster aufweist,
- zu Beginn der Steuerung festgelegt wird, ob in dem durch Dₘₐₓ und Dₘᵢₙ definierten Dosiermengen-Fenster der maximale bzw. minimale Meßwert Mₘₐₓ bzw. Mₘᵢₙ als Richtwert R_{M}=f(R_{D}) für die optimale Dosiermenge Dₒₚₜ = R_{D} zugrunde gelegt wird,
- die Dosiermenge D periodisch im Abstand einer vorgebbaren Taktzeit Δtᵢ um eine vorgebbare Dosiermengenänderung ΔDᵢ verändert wird, wobei
- ein Toleranzwert Tᵢ vorgegeben wird, und
- falls Mₘₐₓ als Richtwert R_{M}=f(R_{D}) zugrunde gelegt wird, bei einer positiven Meßwertänderung ΔMᵢ der folgenden vorzunehmenden Dosiermengenänderung ΔDᵢ₊₁ das gleiche Vorzeichen zugeordnet wird wie der vorherigen Dosiermengenänderung ΔDᵢ, und bei einer negativen Meßwertänderung ΔMᵢ der folgenden vorzunehmenden Dosiermengenänderung ΔDᵢ₊₁ das entgegengesetzte Vorzeichen zugeordnet wird wie der vorherigen Dosiermengenänderung ΔDᵢ, und im letzteren Fall Dᵢ₋₁ als neuer Richtwert R_{D}. für die optimale Dosiermenge Dₒₚₜ zugrunde gelegt wird, falls die Vorzeichen der durchgeführten Dosiermengenänderungen ΔDᵢ und ΔDᵢ₋₁ gleich sind,
- falls Mₘᵢₙ als Richtwert R_{M}=f(R_{D}) zugrunde gelegt wird, bei einer negativen Meßwertänderung ΔMᵢ der folgenden vorzunehmenden Dosiermengenänderung ΔDᵢ₊₁ das gleiche Vorzeichen zugeordnet wird wie der vorherigen Dosiermengenänderung ΔDᵢ und bei einer positiven Meßwertänderung ΔMᵢ der folgenden vorzunehmenden Dosiermengenänderung ΔDᵢ₊₁ das entgegengesetzte Vorzeichen zugeordnet wird wie der vorherigen Dosiermengenänderung ΔDᵢ, und im letzteren Fall Dᵢ₋₁ als neuer Richtwert R_{D*} für die optimale Dosiermenge Dₒₚₜ zugrunde gelegt wird, falls die Vorzeichen der durchgeführten Dosiermengenänderungen ΔDᵢ und ΔDᵢ₋₁ gleich sind
- in dem Fall, in dem der Betrag der Meßwertänderung ΔMᵢ<Tᵢ ist, die folgende vorzunehmende Dosiermengenänderung ΔDᵢ₊₁<0 ist, wobei Dᵢ₋₁ als neuer Richtwert R_{D*} für die optimale Dosiermenge Dₒₚₜ zugrunde gelegt wird, falls die Vorzeichen der durchgeführten Dosiermengenänderungen ΔDᵢ und ΔDᵢ₋₁>0 sind.

2. Verfahren nach Anspruch 1, bei dem
- falls Mₘₐₓ als Richtwert R_{M}=f(R_{D}) zugrunde gelegt wird, der folgenden vorzunehmenden Dosiermengenänderung ΔDᵢ₊₁ ein positives Vorzeichen zugeordnet wird, wenn ΔDᵢ ein positives, ΔDᵢ₋₁ ein negatives und ΔMᵢ ein negatives Vorzeichen hat, und
- falls Mₘᵢₙ als Richtwert R_{M}=f(R_{D}) zugrunde gelegt wird, der folgenden vorzunehmenden Dosiermengenänderung ΔDᵢ₊₁ ein positives Vorzeichen zugeordnet wird, wenn ΔDᵢ ein positives, ΔDᵢ₋₁ ein negatives und ΔMᵢ ein positives Vorzeichen hat.

3. Verfahren nach mindestens einem der vorherigen Ansprüche, bei dem zu Beginn des Verfahrens mit einer Dosiermengenänderung ΔDᵢ<0 gestartet wird.

4. Verfahren nach mindestens einem der vorherigen Ansprüche, bei dem
- falls Dᵢ₋₁ als neuer Richtwert R_{D*} für die optimale Dosiermenge Dₒₚₜ zugrunde gelegt wird, der zugehörige Funktionswert der Meßwertfunktion Mᵢ₋₁ ebenfalls als neuer Richtwert R_{M*} zugrunde gelegt wird.

5. Verfahren nach mindestens einem der vorherigen Ansprüche, bei dem eine maximale Meßwertänderung ΔMᵢ betragsmäßig als oberer Grenzwert ΔM_{grenz} für die Meßwertänderung vorgegeben wird.

6. Verfahren nach mindestens einem der vorherigen Ansprüche, bei dem das zu behandelnde Fluid nach dem Messen mittels einer Umschaltvorrichtung zum Zwecke einer nochmaligen Behandlung zurückgeführt werden kann.

7. Verfahren nach mindestens einem der vorherigen Ansprüche, bei dem die Meßtechnik in einem Bypass-Strom des zu behandelnden Fluidstromes angeordnet wird.

8. Verfahren nach mindestens einem der vorherigen Ansprüche, bei dem das Verfahren abgebrochen wird, falls die Steuerung innerhalb einer vorgebbaren Anzahl aufeinanderfolgender Verfahrensschritte keinen neuen Richtwert R_{M*}, R_{D*} zugrunde legt.

## Claims

1. A method for controlling the optimal dosing quantity Dₒₚₜ of processing chemicals to be incorporated in continuously flowing fluids to be treated, especially for the continuous processing of oil-, tenside- and heavy-metal-containing process and waste water, emulsions and aqueous dispersions, wherein
- a specific property of the fluid to be treated is continuously monitored by means of measuring technology, wherein the dosing quantity Dᵢ and a determined relevant measured value Mᵢ have a characteristic functional relationship for the present case of application, the so-called measured value function M = f(D),
- a maximum or minimum absolute dosing quantity Dₘₐₓ or Dₘᵢₙ which must not be exceeded or below which the dosing quantity must not fall, is pre-determined,
- the measured value function M = f(D) has a maximum or a minimum measured value Mₘₐₓ or Mₘᵢₙ in the window of dosing quantities defined by Dₘₐₓ and Dₘᵢₙ,
- at the beginning of the control it is stipulated whether the maximum or minimum measured value Mₘₐₓ or Mₘᵢₙ in the window of dosing quantities defined by Dₘₐₓ and Dₘᵢₙ, is taken as the basis for the guide value R_{M} = f(R_{D}) for the optimal dosing quantity Dₒₚₜ = R_{D},
- the dosing quantity D is periodically varied at intervals of a pre-determinable cycle time Δtᵢ by a pre-determinable change in dosing quantity ΔDᵢ, wherein
- a tolerance value Tᵢ is pre-determined, and
- if Mₘₐₓ is taken as the basis for the guide value R_{M} = f(R_{D}), in the event of a positive change in the measured value ΔMᵢ, the following change in the dosing quantity to be made ΔDᵢ₊₁ is assigned the same sign as the previous change in the dosing quantity ΔDᵢ and in the event of a negative change in the measured value ΔMᵢ,
the following change in the dosing quantity to be made ΔDᵢ₊₁ is assigned the opposite sign to the previous change in the dosing quantity ΔDᵢ and in the latter case, Dᵢ₋₁ is taken as the basis for the new guide value R_{D*} for the optimum dosing quantity Dₒₚₜ if the signs of the changes in the dosing quantities made ΔDᵢ and ΔDᵢ₋₁ are the same,
- if Mₘᵢₙ is taken as the basis for the guide value R_{M} = f(R_{D}), in the event of a negative change in the measured value ΔM_{i,} the following change in the dosing quantity to be made ΔDᵢ₊₁ is assigned the same sign as the previous change in the dosing quantity ΔDᵢ and in the event of a positive change in the measured value ΔM_{i,} the following change in the dosing quantity to be made ΔDᵢ₊₁ is assigned the opposite sign to the previous change in the dosing quantity ΔDᵢ and in the latter case, Dᵢ₋₁ is taken as the basis for the new guide value R_{D*} for the optimum dosing quantity Dₒₚₜ if the signs of the changes in the dosing quantities made ΔDᵢ and ΔDᵢ₋₁ are the same, and
- if the amount of the change in the measured value is ΔMᵢ < Tᵢ, the following change in the dosing quantity to be made is ΔDᵢ₊₁ < 0, wherein Dᵢ₋₁ is taken as the basis for the new guide value R_{D*} for the optimum dosing quantity Dₒₚₜ if the signs of the changes in the dosing quantities made are ΔDᵢ and ΔDᵢ₋₁ > 0.

2. The method according to claim 1, wherein
- if Mₘₐₓ is taken as the basis for the guide value R_{M} = f(R_{D}), the following change in the dosing quantity to be made ΔDᵢ₊₁ is assigned a positive sign if ΔDᵢ has a positive sign, ΔDᵢ₋₁ has a negative sign and ΔMᵢ has a negative sign, and
- if Mₘᵢₙ is taken as the basis for the guide value R_{M} = f(R_{D}), the following change in the dosing quantity to be made ΔDᵢ₊₁ is assigned a positive sign if ΔDᵢ has a positive sign, ΔDᵢ₋₁ has a negative sign and ΔMᵢ has a positive sign.

3. The method according to at least one of the preceding claims wherein at the beginning of the method, a change in the dosing quantity ΔDᵢ < 0 is used initially.

4. The method according to at least one of the preceding claims wherein
- if Dᵢ₋₁ is taken as the basis for the new guide value R_{D*} for the optimal dosing quantity Dₒₚₜ, the relevant function value of the measured value function Mᵢ₋₁ is also taken as the basis for the new guide value R_{M*}.

5. The method according to at least one of the preceding claims wherein a maximum change in measured value ΔMᵢ is predetermined in terms of quantity as the upper limit ΔMₗᵢₘ for the change in measured value.

6. The method according to at least one of the preceding claims wherein after the measurement the fluid to be treated can be fed back for the purposes of another treatment by means of a changeover device.

7. The method according to at least one of the preceding claims wherein the measuring technology is arranged in a bypass stream of the fluid stream to be treated.

8. The method according to at least one of the preceding claims wherein the method is interrupted if the control system does not take any new guide value R_{M*}, R_{D*} as the basis within a pre-determinable number of successive process steps.

## Revendications

1. Procédé pour la commande de la quantité optimale de dosage Dₒₚₜ de produits chimiques de traitement à introduire en continu dans des fluides à traiter, en particulier pour le traitement continu d'eaux usées de processus, d'émulsions et de dispersions aqueuses contenant huile, tensioactifs et métaux lourds, lors duquel
- une caractéristique particulière du fluide à traiter est en permanence surveillée par une technique de mesure dans laquelle la quantité de dosage Dᵢ et une valeur de mesure associée Mᵢ déterminée présentent une fonction de valeur de mesure appelée M=f(D) caractéristique de la relation fonctionnelle du présent cas d'application,
- une quantité de dose maximale absolue Dₘₐₓ et minimale absolue Dₘᵢₙ à ne pas dépasser en plus ou en moins est allouée,
- la fonction de valeur de mesure M=f(D) présente une valeur de mesure maximale Mₘₐₓ et minimale Mₘᵢₙ dans l'intervalle de quantités de dosage défini par Dₘₐₓ et Dₘᵢₙ,
- au début de la commande, on détermine si dans l'intervalle de quantités de dosage défini par Dₘₐₓ et Dₘᵢₙ, la valeur de mesure maximale Mₘₐₓ ou minimale Mₘᵢₙ est prise comme valeur indicative R_{M}=f(R_{D}) de la quantité de dosage optimale Dₒₚₜ=R_{D}
- la quantité de dosage D est modifiée périodiquement d'une modification de quantité de dosage ΔDᵢ allouable, dans l'intervalle d'un temps de cycle allouable Δtᵢ
- la valeur de tolérance Tᵢ est allouée et
- si Mₘₐₓ est prise comme valeur indicative R_{M}=f(R_{D}), le même signe que celui de la modification de quantité de dosage précédente ΔDᵢ est attribué en cas de modification positive de la valeur de mesure ΔMᵢ de la modification de quantité de dosage ΔDᵢ₊₁ à effectuer, et le signe contraire est attribué comme à la modification de quantité de dosage précédente en cas de modification négative de la valeur de mesure ΔMᵢ de la modification de quantité de dosage ΔDᵢ₊₁ à effectuer et, dans ce dernier cas, Dᵢ₋₁ est pris comme nouvelle valeur indicative R_{Do} pour la quantité de dosage optimale Dₒₚₜ si les signes des modifications de quantité de dosage réalisées ΔDᵢ et ΔDᵢ₋₁ sont les mêmes,
- si Mₘᵢₙ est pris comme valeur indicative R_{M}=f(RD), en cas de modification de valeur de mesure négative ΔMᵢ de la modification de quantité de dosage ΔDᵢ₊₁ à effectuer, le même signe est attribué qu'à la modification de quantité de dosage ΔDᵢ précédente et, en cas de changement positif de valeur de mesure ΔMᵢ de la modification de quantité de dosage ΔDᵢ₊₁ suivante à effectuer, le signe contraire est attribué comme à la modification de quantité de dose ΔDᵢ précédente, et dans ce dernier cas, Dᵢ₋₁ est pris comme nouvelle valeur indicative R_{Do} pour la quantité de dosage optimale Dₒₚₜ si les signes des modifications de quantités de dosage ΔDᵢ et ΔDᵢ₋₁ sont les mêmes
- dans le cas où dans le montant de la modification de la valeur de mesure ΔMᵢ<Tᵢ, la modification de quantité de dosage suivante à effectuer ΔDᵢ₊₁<0, Dᵢ₋₁ étant pris comme nouvelle valeur indicative R_{Do} pour la quantité de dosage optimale Dₒₚₜ, si les signes des modifications de quantités de dosage ΔDᵢ et ΔDᵢ₋₁ effectuées sont > 0.

2. Procédé selon la revendication 1, dans lequel
- si Mₘₐₓ est pris comme valeur indicative R_{M}=f(RD), un signe positif est attribué à la modification de quantité de dose ΔDᵢ₊₁ suivante à effectuer si ΔDᵢ a un signe positif, ΔDᵢ₋₁ a un signe négatif et si ΔMᵢ a un signe négatif et
- si Mₘᵢₙ est pris comme valeur indicative R_{M}=f(RD), un signe positif est attribué à la modification de quantité de dose ΔDᵢ₊₁ suivante à effectuer, si un signe positif est attribué à ΔDᵢ, un signe négatif à ΔDᵢ₋₁ et un signe positif est attribué à ΔMᵢ.

3. Procédé selon au moins une des revendications précédentes, dans lequel le début du procédé est démarré avec une modification de quantité de dosage ΔD₁ < 0.

4. Procédé selon au moins une des revendications précédentes dans lequel
- si Dᵢ₋₁ est pris comme nouvelle valeur indicative R_{Do} pour la quantité de dosage optimale D_{opt,} la valeur de fonction correspondante de la fonction de valeur de mesure Mᵢ₋₁, est également prise comme nouvelle valeur indicative R_{Mo}.

5. Procédé selon au moins une des revendications précédentes, dans lequel une modification maximale de la valeur de mesure ΔMᵢ est allouée comme montant de valeur limite supérieur ΔMₗᵢₘᵢₜ pour la modification de la valeur de mesure.

6. Procédé selon au moins une des revendications précédentes, dans lequel, après la mesure, le fluide à traiter peut être re-acheminé à l'aide d'un dispositif de commutation afin d'être traité de nouveau.

7. Procédé selon au moins une des revendications précédentes, dans lequel la technique de mesure est disposée dans un flux by-pass du flux du fluide à traiter.

8. Procédé selon au moins une des revendications précédentes, dans lequel le procédé est arrêté si la commande ne prend pas une nouvelle valeur indicative R_{Mo,} R_{Do} dans un intervalle allouable de nombres d'étapes de procédé consécutives.
